**Europäisches Patentamt**

**European Patent Office**

**Office européen des brevets**

(19)

(11) Veröffentlichungsnummer: **0 360 296**
**A2**

## (12) EUROPÄISCHE PATENTANMELDUNG

(21) Anmeldenummer: 89117632.3

(22) Anmeldetag: 25.09.89

(51) Int. Cl.⁵: **B01D 59/50**

(30) Priorität: 23.09.88 DD 320088

(43) Veröffentlichungstag der Anmeldung:
28.03.90 Patentblatt 90/13

(84) Benannte Vertragsstaaten:
**DE FR GB IT NL**

(71) Anmelder: **Akademie der Wissenschaften der DDR
Otto-Nuschke-Strasse 22/23
DDR-1086 Berlin(DD)**

(72) Erfinder: **Falk, Heinz, Prof.-Dr.-sc.-Dipl.-Phys.
Scharnweberstrasse 53
DDR-1147 Waldesruh(DD)**

(74) Vertreter: **Patentanwälte Beetz sen. - Beetz jun. Timpe - Siegfried - Schmitt-Fumian-Mayr
Steinsdorfstrasse 10
D-8000 München 22(DE)**

(54) **Verfahren und Vorrichtung zur Trennung und Bestimmung von Atomen.**

(57) Die Erfindung betrifft die räumliche Trennung und Bestimmung von Atomen eines aus einer Probe (2) hergestellten Atomstrahls.

Erfindungsgemäß werden die abzutrennenden bzw. zu bestimmenden Atome durch Einstrahlung von Resonanzstrahlung unter einem Winkeln α gegen die Ausbreitungsrichtung des Atomstrahls abgelenkt, und dadurch von den Matrixbestandteilen des Atomstrahls räumlich getrennt und können anschließend analytisch bestimmt werden, bevorzugt durch Messung der Fluoreszenz oder Absorption.

Das Verfahren gestattet auch eine sequentielle oder simultane Bestimmung verschiedener Elemente oder Isotope in einer zu analysierenden Probe.

Die erfindungsgemäße Vorrichtung umfaßt ein Zweikammersystem aus einer Vakuumkammer (7), die durch eine Zwischenwand (9) in eine erste Teilkammer (17) und eine zweite Teilkammer (18) unterteilt ist. In das Zweikammersystem mündet ein Trennrohr (19), an dessen anderem Ende eine Atomstrahlquelle (1) mit der Probe (2) angeordnet ist. Den Teilkammern (17, 18) sind Laser als Resonanzstrahlungsquellen (5, 11) zugeordnet. Der zweiten Teilkammer (18) ist eine Nachweiseinrichtung (14) zugeordnet, deren Strahlengang quer zum Strahlengang der zu bestimmenden Atome des aus dem primären Atomstrahl (3) abgelenkten sekundären Atomstrahls (15) verläuft.

Fig. 1

# Verfahren und Vorrichtung zur Trennung und Bestimmung von Atomen

Die Erfindung betrifft die räumliche Trennung sowie die Bestimmung von Atomen eines aus einer Probe, insbesondere einer Analysenprobe, hergestellten Atomstrahls und ist besonders in der analytischen Atom- und Molekülspektroskopie anwendbar.

Es sind bereits verschiedene Verfahren und Vorrichtungen zur analytischen Atomspektroskopie bekannt, die auf der selektiven Wechselwirkung von optischer Strahlung mit einer atomisierten Analysenprobe beruhen. Dabei werden die frequenzselektiven Effekte der Absorption, Fluoreszenz und/oder Photoionisation ausgenutzt, oder die Emission des thermisch oder elektrisch angeregten Probendampfes wird spektral aufgelöst und beobachtet bzw. gemessen. Die Unterscheidbarkeit verschiedener Species einer Analysenprobe wird bei den bekannten Verfahren wesentlich durch die Einflüsse der Matrixbestandteile auf den Meßvorgang begrenzt. Das von der Matrix verursachte Störsignal beruht auf der Untergrundabsorption, der Lichtstreuung an Atomen, Molekülen oder Partikeln, der Photoionisation und verschiedenen Emissionsprozessen. Zur Verminderung der störenden Matrixeinflüsse sind verschiedene experimentelle Maßnahmen bekannt, so die Mehrstufen-Fluoreszenz oder -Photoionisation mittels Laseranregung (DE-A-3 630 068) bzw. die Kopplung einer Photoionisationsanordnung mit einem Massenspektrometer (W.S. Letochov, Analytische Laserspektroskopie (in russisch); Nauka, Moskau (1986)).

Die Selektivität der angewandten spektrometrischen Verfahren ist begrenzt durch die spektrale Breite der gemessenen Atomübergänge, die wiederum von der Doppler-Verbreiterung und damit von der Geschwindigkeit der Probenatome abhängt.

Es ist bekannt, die Doppler-Verbreiterung durch Verwendung von Atomstrahlen anstelle der zumeist benutzten thermischen Atomisatoren zu vermindern (W.S. Letochov, a.a.O.)

Es ist weiterhin bekannt, daß durch Ausnutzung von Effekten der fraktionierten Verdampfung in elektrothermischen Atomisatoren bei vermindertem Gasdruck eine Verminderung der Matrixkonzentration während der Messung der Emission der zu bestimmenden Atome erreicht werden kann (DD-A-143 178).

Alle bekannten Verfahren der analytischen Atomspektroskopie besitzen den Nachteil, daß sich Matrixbestandteile und zu bestimmende Atome gleichzeitig im Beobachtungsvolumen befinden, wodurch die Leistungsfähigkeit erheblich eingeschränkt wird.

Der Erfindung liegt die Aufgabe zugrunde, ein Verfahren sowie eine Vorrichtung zur räumlichen Trennung von Atomen anzugeben, insbesondere zur qualitativen und quantitativen Bestimmung von Atomen durch Spektrometrie, mit denen der Einfluß von Matrixbestandteilen auf das angewandte spektrometrische Bestimmungsverfahren weitgehend eliminiert wird. Das verwandte Bestimmungsverfahren für die zu bestimmenden Atome soll ferner auch den Einzelatomnachweis gestatten.

Die Aufgabe wird anspruchsgemäß gelöst. Die abhängigen Ansprüche betreffen vorteilhafte Ausführungsformen der Erfindung.

Das erfindungsgemäße Verfahrenskonzept beruht darauf, daß die betreffende Probe, insbesondere eine Analysenprobe, in einen primären Atomstrahl übergeführt wird und aus diesem die abzutrennenden bzw. zu bestimmenden Atome durch einen gegen die Ausbreitungsrichtung des Atomstrahls geneigten, insbesondere optischen Resonanzstrahl abgelenkt werden. Der von den Resonanzphotonen auf die abzutrennenden bzw. zu bestimmenden Atome übertragene Impuls wird sowohl zur Verminderung der thermischen Geschwindigkeit als auch zur Änderung der Bewegungsrichtung der Atome des resultierenden sekundären Atomstrahls wirksam. Somit entstehen räumlich getrennte Atomstrahlen, die ausgeblendet werden können.

Die Erfindungskonzeption ist allgemein auf die selektive Abtrennung einer oder mehrerer Atomarten aus einem primären Atomstrahl einer Probe anwendbar, wobei der bzw. die resultierenden sekundären Atomstrahlen wie auch der nach der Ablenkung der abzutrennenden Atome verbleibende primäre Atomstrahl beliebig verwendet werden können, beispielsweise in der Atom- und Kernphysik oder bei technischen Prozessen zur Atom- bzw. Isotopentrennung.

Die Erfindung ist insbesondere auf die qualitative und besonders die quantitative Bestimmung einer oder mehrerer Atomarten eines primären Atomstrahls anwendbar, der auch Matrixbestandteile bzw. nicht zu bestimmende Atome enthält.

Die Erfindung wird daher im folgenden anhand der Anwendung in der Analytik näher erläutert, wobei die erläuterten Aspekte nicht auf die Atomanalytik beschränkt sind.

Es ist erfindungsgemäß von Vorteil, den matrixfreien, sekundären Atomstrahl nach seiner Ausblendung durch resonante Einstrahlung entgegengesetzt zu seiner Ausbreitungsrichtung weiter abzubremsen. Die Bestimmung der ausgeblendeten Atome geschieht vorteilhaft durch Absorptions- oder Fluoreszenzmessung mit der Resonanzstrahlung.

Das Verfahren ermöglicht den selektiven Nachweis mehrerer Atomsorten sequentiell dadurch, daß mehrere Resonanzfrequenzen benutzt werden, wobei die Verwendung von Laserfrequenzen bevorzugt ist.

Zum anderen lassen sich simultan mehrere Atomsorten in einem Atomstrahl selektiv nachweisen, indem durch Einstrahlung mehrerer auf die jeweiligen Resonanzfrequenzen abgestimmter Resonanzstrahlungen, insbesondere von Lasern, räumlich getrennte, matrixfreie Atomstrahlen erzeugt werden, die separat weiterverarbeitet, gewonnen bzw. detektiert werden.

Die Resonanzfrequenz der Resonanzstrahlung bzw. Resonanzstrahlungen kann vorteilhaft sequentiell oder simultan auf verschiedene Isotope des oder der zu bestimmenden Atome abgestimmt werden, die dann selektiv bestimmt werden.

Die verwendete, besonders von einem Laser erzeugte Resonanzstrahlung soll in an sich bekannter Weise wenig unterhalb der Frequenz des Überganges aus dem Grundzustand in einen angeregten Zustand liegen. Bekanntlich kann, wie bereits experimentell gezeigt, bei geeigneter Wahl des Atomüberganges eine effektive Kühlung des Atomstrahles erreicht werden, indem die Laserfrequenz der Doppler-Verschiebung angepaßt und die Sättigungsintensität eingestrahlt wird.

Bei hohem Überschuß der Matrixbestandteile gegenüber der Konzentration der zu bestimmenden Atome ist auch eine Absorption der zu den genannten Atomen resonanten Photonen, z.B. durch Streuung, durch die Matrix und damit zunächst auch eine Auslenkung von Matrixbestandteilen zu erwarten. Die Ablenkung der Matrixbestandteile bleibt jedoch gegenüber derjenigen der zu bestimmenden Atome vernachlässigbar, da dafür die Absorption und Reemission von ca. $10^4$ Photonen pro Teilchen innerhalb von ca. 1 ms erforderlich wäre. Letzteres ist nur möglich, wenn ein und derselbe Atom- oder Molekülübergang zyklisch durchlaufen wird, was nur unter sehr speziellen Bedingungen eintritt, die zwar für die zu bestimmenden Atome, jedoch nicht für Matrixbestandteile erfüllt sind. Die Verwendung des Atomstrahles ermöglicht die Nutzung sehr schmalbandiger Resonanzstrahlung von ca. 1 MHz Bandbreite bei einer Frequenz von $10^{14}$ bis $10^{15}$ Hz, wodurch zusätzlich eine zufällige Koinzidenz der Absorptionsfrequenzen der zu bestimmenden Atome und der Matrix sehr unwahrscheinlich wird.

Die geringe Translationsgeschwindigkeit der zu bestimmenden Atome nach der Ausblendung gewährleistet eine ausreichend lange Beobachtungszeit und damit deren sicheren quantitativen Nachweis.

Die erfindungsgemäße Vorrichtung zur Durchführung des Verfahrens ist gekennzeichnet durch

- eine evakuierbare Vakuumkammer mit einer Zwischenwand, welche die Vakuumkammer in zwei Teilkammern trennt,
- ein Trennrohr, das teils mit der ersten Teilkammer und teils mit der zweiten Teilkammer verbunden ist,
- eine Atomstrahlquelle mit einer Aufnahme für die Probe, die an dem von den Teilkammern abgewandten Ende des Trennrohrs vorgesehen ist und einen primären Atomstrahl erzeugt, dessen Strahlengang in die erste Teilkammer hinein verläuft,
- eine oder mehrere der ersten Teilkammer zugeordnete Resonanzstrahlungsquellen mit Abbildungsoptik mit zunächst innerhalb der ersten Teilkammer verlaufendem Strahlengang, der im Bereich des Trennrohrs unter einem vorgegebenen Winkel ($\alpha$) zum Strahlengang des primären Atomstrahls in Richtung der Atomstrahlquelle verläuft, wobei der Strahlengang des bzw. der durch die Wechselwirkung der Resonanzstrahlung von der bzw. den Resonanzstrahlungsquellen mit dem primären Atomstrahl aus ihm abgelenkten sekundären Atomstrahlen in die zweite Teilkammer hinein verläuft, und

eine oder mehrere Einrichtungen zur Gewinnung der Atome des bzw. der sekundären Atomstrahlen und/oder eine oder mehrere Nachweiseinrichtungen mit Abbildungsoptik zur analytischen Bestimmung der Atome des bzw. der sekundären Atomstrahlen, die in der zweiten Teilkammer vorgesehen sind und deren Strahlengang quer zum Strahlengang des bzw. der sekundären Atomstrahlen verläuft.

Die Resonanzstrahlungsquellen sind vorzugsweise Laser.

Bei Zuordnung der Resonanzstrahlungsquelle zur ersten Teilkammer 17 unter einem von $\alpha$ abweichenden Winkel seines in die Kammer eintretenden Strahlenganges zum Atomstrahlengang ist innerhalb der ersten Teilkammer eine Spiegelanordnung zur Umlenkung des Strahlenganges in das Trennrohr unter vorgegebenem Winkel $\alpha$ zum Atomstrahlengang vorgesehen.

Es ist zweckmäßig, wenn der zweiten Teilkammer gleichfalls eine Resonanzstrahlungsquelle, vorzugsweise ein Laser, mit Abbildungsoptik zugeordnet ist, dessen Strahlengang, falls erforderlich, nach Umlenkung mittels einer Spiegelanordnung, gegenläufig zum Strahlengang der zu bestimmenden Atome gerichtet ist. Durch diese Maßnahme kann, wenn eine Nachweiseinrichtung zur analytischen Bestimmung von Atomen des sekundären Atomstrahls vorgesehen ist, während des Meßvorganges der in die zweite Teilkammer eintretende, matrixfreie Atomstrahl entgegengesetzt zu seiner Ausbreitungsrichtung weiter abgebremst werden.

In weiterer vorteilhafter Ausgestaltung der erfindungsgemäßen Vorrichtung können der zweiten Teilkammer mehrere auf unterschiedlicher Frequenz emittierende Resonanzstrahlungsquellen bzw. Laser zugeordnet sein, deren Strahlengänge direkt oder nach Umlenkung mittels Spiegelanordnungen in verschiedenen azimutalen Winkeln um die Achse des Atomstrahlenganges angeordnet sind. Die zugehörigen Nachweiseinrichtungen liegen jeweils in der durch den Strahlengang der Resonanzstrahlungsquelle und den Atomstrahlengang aufgespannten Ebene.

Bevorzugt werden für die Vorrichtung als Laserstrahlungsquellen abstimmbare Halbleiterlaser eingesetzt.

Die Anwendung der erfindungsgemäßen Vorrichtung für analytische Zwecke ermöglicht gegenüber dem Stand der Technik auf dem Gebiet der Elementspurenanalyse eine Steigerung der Nachweisempfindlichkeit von mehr als zwei Größenordnungen.

Mit dieser Empfindlichkeit werden direkte Bestimmungen von Spurenelementen in hochreinen Festkörpern, z.B. mikroelektronischen Bauelementen, sowie biologischen Objekten möglich.

Die Erfindung wird nachstehend anhand von Ausführungsbeispielen näher erläutert. In den zugehörigen Zeichnungen zeigen:

Fig. 1 Eine schematische Darstellung einer erfindungsgemäßen Vorrichtung
und

Fig. 2 eine schematische Darstellung einer anderen Ausführungsvariante der Vorrichtung nach der Erfindung mit mehreren zugeordneten Lasern und Nachweiseinrichtungen, von der Atomstrahlquelle aus gesehen.

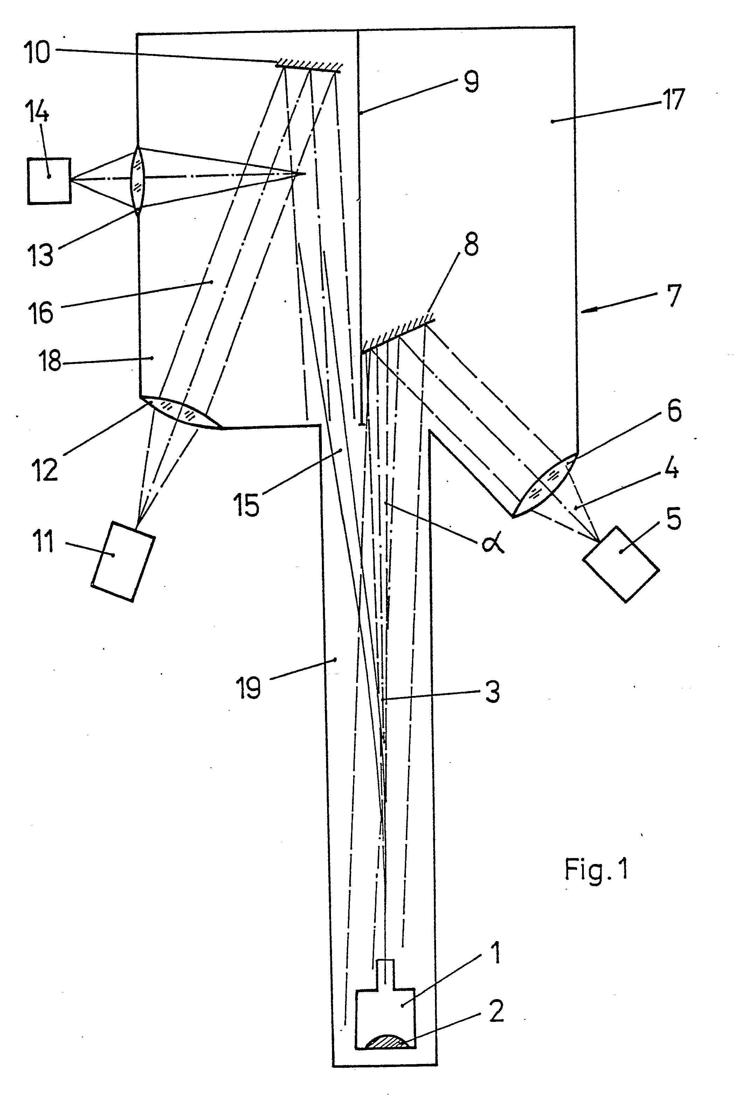

Wie aus Fig. 1 ersichtlich, tritt aus der Atomstrahlquelle 1 ein primärer Atomstrahl 3 geringer Öffnung von ca. 10 mrad durch Verdampfung der Probe 2, die insbesondere eine Analysenprobe darstellt, aus. Entgegen der Ausbreitungsrichtung des Atomstrahls 3 wird von der Resonanzstrahlungsquelle 5, die ein Laser ist, über einen Spiegel 8 ein Laserstrahl mit einem Winkel $\alpha$ gegen die Atomstrahlachse ausgesandt. Die spektrale Bandbreite des Lasers entspricht etwa der natürlichen Linienbreite des gewählten Resonanzüberganges der zu bestimmenden Atome. Die Frequenz des Lasers kann entweder derart durchgestimmt werden, daß die Dopplerverschiebung der die Atomstrahlquelle 1 verlassenden Atome kompensiert wird, oder ein Magnetfeld variabler Feldstärke wird im Bereich der Wechselwirkung des Lasers mit dem Atomstrahl zur Kompensation der Dopplerverschiebung angewandt. Im letzteren Fall kann der Laser mit einer festen Frequenz entsprechend der Resonanzfrequenz der zu bestimmenden Atome arbeiten.

Neben einer Abbremsung der zu bestimmenden Atome durch den Laserstrahl des Strahlbündels 4 tritt aufgrund des Neigungswinkels $\alpha$ auch eine Ablenkung auf, so daß die entsprechenden Atome in die zweite Teilkammer 18 eintreten, die durch die Zwischenwand 9 von der ersten Teilkammer 17 getrennt ist. Der die Matrix enthaltende unabgelenkte Atomstrahl tritt in die erste Teilkammer 17 ein.

Mittels des Lasers als Resonanzstrahlungsquelle 11 kann der matrixfreie, sekundäre Atomstrahl 15 analog der Wirkungsweise des Lasers der Resonanzstrahlungsquelle 5 weiter abgebremst werden. Auf diese Weise liegen im Bereich des Gesichtsfeldes der Empfängeranordnung bzw. Nachweiseinrichtung 14 mit Abbildungsoptik 13 Atome mit sehr geringer Geschwindigkeit vor. Diese können z.B. durch Atomfluoreszenz infolge Anregung durch das Strahlbündel 16 des Lasers mit hoher Effektivität nachgewiesen werden.

Innerhalb der gesamten Vakuumkammer 7 ist ein Vakuum von ca. $10^{-4}$ Pa durch eine geeignete Pumpanordnung, die in der Zeichnung nicht dargestellt ist, zu gewährleisten. Als Resonanzstrahlungsquellen 5 und 11 sind frequenzdurchstimmbare Halbleiterlaser oder Farbstofflaser verwendbar. Laserleistungen der Größenordnung von 10 mW sind für die zu verwendenden Strahldurchmesser von ca. 10 mm ausreichend zur Sättigung der Atom-Resonanzübergänge.

In Abhängigkeit vom Energieniveauschema der zu bestimmenden Atomsorte kann die Einstrahlung einer zusätzlichen Laserfrequenz zur Entleerung parasitär besetzter Energieniveaus erforderlich sein. Diese Frequenz kann entweder mittels Durchstimmung von der Resonanzstrahlungsquelle 5 alternierend zur Resonanzfrequenz oder durch einen separaten Laser, gegebenenfalls auch aus einer vom Strahlbündel 4 verschiedenen Richtung, in an sich bekannter Weise bereitgestellt werden.

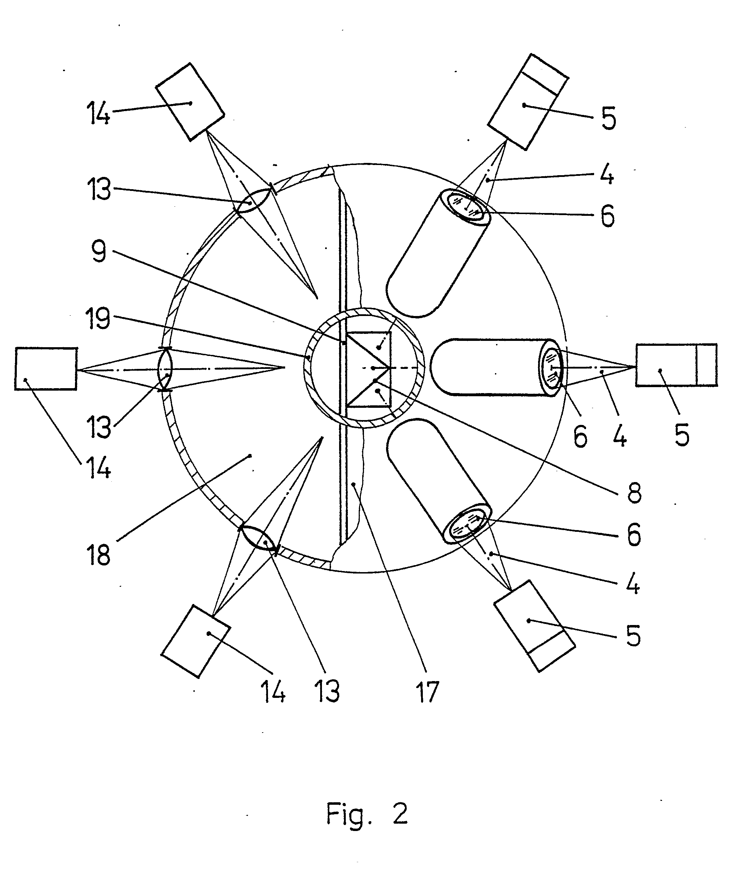

Bei der in Fig. 2 schematisch dargestellten, von der Atomstrahlquelle 1 aus gesehenen Vorrichtungsvariante sind Trennrohr 19 und zweite Teilkammer 18, die von der ersten Teilkammer 17 durch die Zwischenwand 9 getrennt ist, geöffnet. Diese Vorrichtung weist mehrere der ersten Teilkammer 17 zugeordnete, auf unterschiedlicher Frequenz emittierende Laser als Resonanzstrahlungsquelle 5 mit Abbildungsoptik 6 auf, deren Strahlengänge 4 in verschiedenen azimutalen Winkeln um die Achse des Atomstrahlganges angeordnet sind. Die zugehörigen Nachweiseinrichtungen 14 mit Abbildungsoptiken 13 liegen jeweils in der durch Laserstrahlengang und Atomstrahlengang aufgespannten Ebene. Die Vorrichtung weist ferner wie die von Fig. 1 einen Spiegel 8 auf.

Die Erfindungskonzeption eignet sich vorteilhaft zur räumlichen Trennung und Gewinnung bzw. analytischen Bestimmung beliebiger Atome und gestattet auch eine sequentielle oder simultane Bestimmung verschiedener Elemente oder Isotope einer Probe.

## Ansprüche

1. Verfahren zur räumlichen Trennung von unterschiedlichen Atomen eines Atomstrahls,
dadurch gekennzeichnet,
daß die aus dem Atomstrahl abzutrennenden Atome durch eine unter einem vorgegebenen Winkel gegen die Ausbreitungsrichtung des Atomstrahls eingestrahlte, auf eine Resonanzfrequenz der abzutrennenden Atome abgestimmte Resonanzstrahlung aus dem Atomstrahl abgelenkt und von ihm räumlich getrennt werden.

2. Verfahren nach Anspruch 1, dadurch gekennzeichnet, daß zur Bestimmung von Atomen eines aus einer Analysenprobe hergestellten primären Atomstrahls die zu bestimmenden Atome durch eine unter einem vorgegebenen Winkel gegen die Ausbreitungsrichtung des Atomstrahls eingestrahlte, auf eine Resonanzfrequenz der zu bestimmenden Atome abgestimmte Resonanzstrahlung aus dem Atomstrahl abgelenkt und von den weiteren Bestandteilen des Atomstrahls räumlich getrennt und Art und/oder Anzahl der abgetrennten Atome bestimmt werden.

3. Verfahren nach Anspruch 1 oder 2, dadurch gekennzeichnet,
daß der aus dem primären Atomstrahl durch Einstrahlung der Resonanzstrahlung räumlich getrennte sekundäre Atomstrahl durch weitere Einstrahlung einer auf eine Resonanzfrequenz der Atome des sekundären Atomstrahls abgestimmte Resonanzstrahlung in zu seiner Ausbreitungsrichtung entgegengesetzter Richtung weiter abgebremst werden.

4. Verfahren nach einem der Ansprüche 1 bis 3, dadurch gekennzeichnet,
daß auf den primären und/oder den sekundären Atomstrahl eine Resonanzstrahlung eingestrahlt wird, deren Frequenz derart unterhalb der Frequenz eines Übergangs der abgelenkten Atome, insbesondere des Übergangs aus dem Grundzustand in einen angeregten Zustand, liegt, daß die Doppler-Verschiebung kompensiert und die Sättigungsintensität eingestrahlt wird.

5. Verfahren nach einem der Ansprüche 2 bis 4, dadurch gekennzeichnet,
daß die zu bestimmenden Atome des sekundären Atomstrahls nach Ablenkung mittels einer im optischen Bereich liegenden Resonanzstrahlung durch Messung der Fluoreszenz und/oder der Absorption bestimmt werden.

6. Verfahren nach einem der Ansprüche 1 bis 5, dadurch gekennzeichnet,
daß sequentiell mehrere Resonanzfrequenzen, insbesondere Laserfrequenzen, zur Ablenkung bzw. zum selektiven Nachweis mehrerer Atomsorten eingestrahlt werden.

7. Verfahren nach einem der Ansprüche 1 bis 5, dadurch gekennzeichnet,
daß simultan mehrere auf die jeweiligen Resonanzfrequenzen abgestimmte Resonanzstrahlungen, insbesondere Laserstrahlungen, zur räumlichen Ablenkung und Trennung von Atomstrahlen eingestrahlt werden, die separat detektiert werden.

8. Verfahren nach einem der Ansprüche 1 bis 7, dadurch gekennzeichnet,
daß die Frequenz der Resonanzstrahlung(en) bzw. Laserstrahlung(en) sequentiell oder simultan auf verschiedene Isotope des oder der zu bestimmenden Atome abgestimmt wird, die dann ggfs. selektiv nachgewiesen werden.

9. Vorrichtung zur Durchführung des Verfahrens nach einem der Ansprüche 1 bis 8, gekennzeichnet durch
- eine evakuierbare Vakuumkammer (7) mit einer Zwischenwand (9), welche die Vakuumkammer (7) in zwei Teilkammern (17, 18) trennt,
- ein Trennrohr (19), das teils mit der ersten Teilkammer (17) und teils mit der zweiten Teilkammer (18) verbunden ist,
- eine Atomstrahlquelle (1) mit einer Aufnahme für die Probe (2), die an dem von den Teilkammern (17, 18) abgewandten Ende des Trennrohrs (19) vorgesehen ist und einen primären Atomstrahl (3) erzeugt, dessen Strahlengang in die erste Teilkammer (17) hinein verläuft,
- eine oder mehrere der ersten Teilkammer (17) zugeordnete Resonanzstrahlungsquellen (5), insbesondere Laser, mit Abbildungsoptik (6) mit zunächst innerhalb der ersten Teilkammer (17) verlaufendem Strahlengang, der im Bereich des Trennrohrs (19) unter einem vorgegebenen Winkel ($\alpha$) zum Strahlengang des primären Atomstrahls (3) in Richtung der Atomstrahlquelle (1) verläuft, wobei der Strahlengang des bzw. der durch die Wechselwirkung der Resonanzstrahlung von der bzw. den Resonanzstrahlungsquellen (5) mit dem primären Atomstrahl (3) aus ihm abgelenkten sekundären Atomstrahlen (15) in die zweite Teilkammer (18) hinein verläuft, und
eine oder mehrere Einrichtungen zur Gewinnung der Atome des bzw. der sekundären Atomstrahlen (15) und/oder eine oder mehrere Nachweiseinrichtungen (14) mit Abbildungsoptik (13) zur analytischen Bestimmung der Atome des bzw. der sekundären Atomstrahlen (15), die in der zweiten Teilkammer (18) vorgesehen sind und deren Strahlengang quer zum Strahlengang des bzw. der sekundären Atomstrahlen verläuft (Fig. 1).

10. Vorrichtung nach Anspruch 9, gekennzeichnet durch eine in der zweiten Teilkammer vorgesehene zweite Resonanzstrahlungsquelle (11) mit Abbildungsoptik (12), deren Strahlengang gegenläufig zum Strahlengang des bzw. der sekundären Atomstrahlen (16) verläuft (Fig. 1).

11. Vorrichtung nach Anspruch 9 oder 10, gekennzeichnet durch

einen in der ersten Teilkammer (17) vorgesehenen Spiegel (8), der den Strahlengang der Resonanzstrahlungsquelle (5) in das Trennrohr (19) hinein umlenkt, und/oder einen in der zweiten Teilkammer (18) vorgesehenen Spiegel (10), der den Strahlengang der zweiten Resonanzstrahlungsquelle (11) gegenläufig zum Strahlengang des sekundären Atomstrahls (15) umlenkt (Fig. 1).

12. Vorrichtung nach einem der Ansprüche 9 bis 11, dadurch gekennzeichnet, daß der zweiten Teilkammer (18) mehrere auf unterschiedlichen Frequenzen emittierende Resonanzstrahlungsquellen (5) zugeordnet sind, deren Strahlengänge in verschiedenen azimutalen Winkeln um die Achse des primären Atomstrahlengangs angeordnet sind, und die zugehörigen Nachweiseinrichtungen (14) jeweils in der durch den Strahlengang der Resonanzstrahlungsquelle (5) und den Strahlengang des sekundären Atomstrahls (15) aufgespannten Ebene liegen.

13. Vorrichtung nach einem der Ansprüche 9 bis 12, dadurch gekennzeichnet, daß die Resonanzstrahlungsquellen (5) und/oder die zweiten Resonanzstrahlungsquellen (11) Laser sind, vorzugsweise abstimmbare Halbleiterlaser.

EP 0 360 296 A2

Fig. 1

Fig. 2